# EUROPEAN PATENT APPLICATION

(11) **EP 2 753 022 A1**
(43) Date of publication of application: **09.07.2014**
(21) Application number: 12839732.0
(22) Date of filing: 24.09.2012
(51) Int. Cl.: H04L 12/46

(54) **VIRTUAL PRIVATE NETWORK IMPLEMENTATION METHOD AND SYSTEM BASED ON TRAFFIC ENGINEERING TUNNEL**

(30) Priority: 13.10.2011 CN 201110310193
(71) Applicant: Huawei Technologies Co., Ltd, Shenzhen, Guangdong 518129 (CN)
(72) Inventor: LI, Zhenbin, Guangdong 518129 (CN); YU, Jingming, Guangdong 518129 (CN); QU, Dan, Guangdong 518129 (CN)
(74) Representative: Pfenning, Meinig & Partner GbR
(86) International application number: PCT/CN2012/081811
(87) International publication number: WO 2013/053284

(57) **Abstract**

Embodiments of the present invention provide a virtual private network implementation method and system based on a traffic engineering tunnel. The virtual private network implementation method based on a traffic engineering tunnel includes: establishing a traffic engineering tunnel in response to establishment information about a virtual private network service; bearing the virtual private network service using the traffic engineering tunnel; and deleting the traffic engineering tunnel in response to cancellation information about the virtual private network service. In the foregoing manner, a traffic engineering tunnel is dynamically established or deleted according to a requirement of a virtual private network service, a mechanism for establishing a TE tunnel as required is provided, and the tunnel not used by the virtual private network service is deleted in time, thereby effectively saving network resources.

## Description

This application claims priority to Chinese Patent Application No. 201110310193.7, filed with the Chinese Patent Office on October 13, 2011 and entitled "VIRTUAL PRIVATE NETWORK IMPLEMENTATION METHOD AND SYSTEM BASED ON TRAFFIC ENGINEERING TUNNEL", which is incorporated herein by reference in its entirety.

### TECHNICAL FIELD

The present invention relates to the field of virtual private network technologies, and more particularly to a virtual private network implementation method and system based on a traffic engineering tunnel.

### BACKGROUND

With gradual popularization of networks, in order to share commercial data among branches of a company, the branches need to be connected to a network, so as to share data under the premise of ensuring security of data storage and transmission. To achieve this object, apart from renting a private line to implement interconnection, the branches may also directly establish a virtual private network (Virtual Private Network, VPN) through a public network. The VPN uses the public network and virtualizes the public network to be a private network through various means such as a tunnel technology, so as to implement secure data transmission similar to that of a private network.

A VPN service may be borne using a traffic engineering (Traffic Engineering, TE) tunnel, and an advantage thereof is that the bandwidth and quality of service (Quality of Service, QoS) services are ensured while a variety of highly reliable protection features are provided.

Currently, in an existing VPN implementation solution, a TE tunnel is often established in advance through configuration, and one or more TE tunnels that meet requirements are selected for the VPN service by using a tunnel policy (Tunnel Policy), so as to complete mapping from the VPN service to the TE tunnel. In such solution, establishment of the TE tunnel is separated from the VPN service, and there are cases where the established TE tunnel is not used by the VPN service, thereby causing a waste of network resources.

In summary, it is necessary to provide a VPN implementation method and system based on a TE tunnel so as to solve the problem in the existing VPN implementation solution that network resources are wasted because the establishment of the TE tunnel is separated from the VPN service.

### SUMMARY

A main technical problem to be solved by the present invention is to provide a VPN implementation method and system based on a TE tunnel, so as to effectively save network resources.

To solve the foregoing technical problem, in an aspect, a technical solution adopted by the present invention is to provide a VPN implementation method based on a TE tunnel, which includes: establishing a TE tunnel in response to establishment information about a VPN service; bearing the VPN service using the TE tunnel; and deleting the TE tunnel in response to cancellation information about the VPN service.

To solve the foregoing technical problem, in an aspect, another technical solution adopted by the present invention is to provide a VPN implementation system based on a TE tunnel, which includes: a tunnel establishment module, configured to establish a TE tunnel in response to establishment information about a VPN service; a tunnel maintenance module, configured to bear the VPN service using the TE tunnel; and a tunnel deletion module, configured to delete the TE tunnel in response to cancellation information about the VPN service.

In an aspect, beneficial effects of the present invention lie in that: different from the prior art, the VPN implementation method and system based on a TE tunnel according to the embodiments of the present invention dynamically establish or delete a TE tunnel according to a requirement of a VPN service, provide a mechanism for establishing a TE tunnel as required, and delete the tunnel not used by the VPN service in time, thereby effectively saving network resources.

### BRIEF DESCRIPTION OF DRAWINGS

FIG. 1 is a flow chart of a VPN implementation method based on a TE tunnel according to an embodiment of the present invention;
FIG. 2 is a network schematic structural diagram of a first application scenario of a VPN implementation method based on a TE tunnel according to an embodiment of the present invention;
FIG. 3 is a network schematic structural diagram of a second application scenario of a VPN implementation method based on a TE tunnel according to an embodiment of the present invention;
FIG. 4 is a network schematic structural diagram of a third application scenario of a VPN implementation method based on a TE tunnel according to an embodiment of the present invention;
FIG. 5 is a network schematic structural diagram of a fourth application scenario of a VPN implementation method based on a TE tunnel according to an embodiment of the present invention;
FIG. 6 is a network schematic structural diagram of a fifth application scenario of a VPN implementation method based on a TE tunnel according to an embodiment of the present invention;
FIG. 7 is a network schematic structural diagram of a sixth application scenario of a VPN implementation method based on a TE tunnel according to an embodiment of the present invention;
FIG. 8 is a network schematic structural diagram of a seventh application scenario of a VPN implementation method based on a TE tunnel according to an embodiment of the present invention;
FIG. 9 is a network schematic structural diagram of an eighth application scenario of a VPN implementation method based on a TE tunnel according to an embodiment of the present invention; and
FIG. 10 is a schematic block diagram of a VPN implementation system based on a TE tunnel according to an embodiment of the present invention.

### DESCRIPTION OF EMBODIMENTS

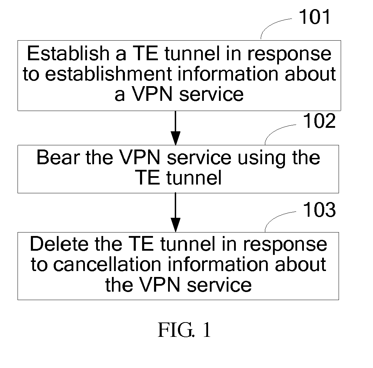

Referring to FIG. 1, FIG. 1 is a flow chart of a VPN implementation method based on a TE tunnel according to an embodiment of the present invention. As shown in FIG. 1, the VPN implementation method based on a TE tunnel according to this embodiment mainly includes the following steps:
Step 101: Establish a TE tunnel in response to establishment information about a VPN service;
step 102: bear the VPN service using the TE tunnel; and
step 103: delete the TE tunnel in response to cancellation information about the VPN service.

In the foregoing manner, the VPN implementation method based on a TE tunnel according to this embodiment dynamically establishes or deletes a TE tunnel according to a requirement of a VPN service, provides a mechanism for establishing a TE tunnel as required, and deletes the tunnel not used by the VPN service in time, thereby effectively saving network resources.

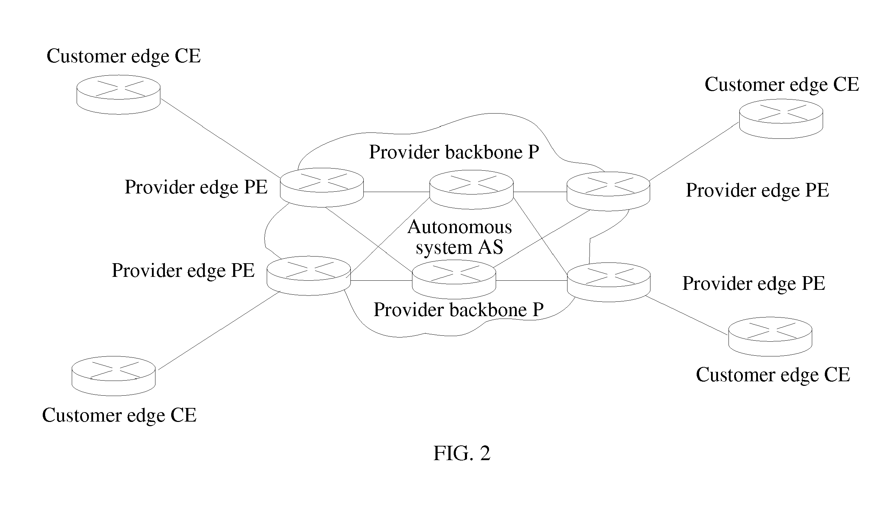

Referring to FIG. 2, FIG. 2 is a network schematic structural diagram of a first application scenario of a VPN implementation method based on a TE tunnel according to an embodiment of the present invention. As shown in FIG. 2, in the embodiment, the VPN implementation method based on a TE tunnel according to this embodiment of the present invention applies to a scenario of a multi-protocol label switching (Multi-Protocol Label Switching, MPLS) layer-3 virtual private network (L3VPN) in a single autonomous system (Autonomous System, AS), that is, the VPN service in this embodiment is an MPLS L3VPN service.

In the scenario shown in FIG. 2, there are mainly three devices: a customer edge (Customer Edge, CE) device, a provider edge (Provider Edge, PE) device, and a provider backbone (Provider, P) device. Among these devices, the CE device is a component of a customer premises network, for example, a router, a switch, or a host, which is unaware of the existence of a VPN, and does not need to maintain entire routing information of the VPN. The PE device, which is an edge device of a provider network, is directly connected to the CE device and located in an MPLS network, and completes all processing on the VPN. The P device is located in the provider network and not directly connected to the CE device, and only needs to have a basic signaling function and a forwarding capability of an MPLS. Multiple virtual routing and forwarding (Virtual Routing and Forwarding, VRF) instances are configured on each PE device. These VRF instances correspond to one or more sub-interfaces on the PE device, and are used to store routing information of the VPN that these sub-interfaces belong to. Generally, each VRF instance includes routing information of only one VPN. However, if a sub-interface belongs to multiple VPNs, the corresponding VRF instances include routing information of all VPNs that the sub-interface belongs to.

Each VRF instance has a route distinguisher (Route Distinguisher, RD) attribute and a route target (Route Target, RT) attribute, where the RD is used to prevent an address overlapping phenomenon between different VPNs and is globally unique. Generally, the same RD is assigned to VRF instances that correspond to sub-interfaces on different PE devices and belonging to the same VPN. That is, one unique RD is assigned to each VPN. For VPNs with overlapping addresses, a sub-interface on the PE device belongs to multiple VPNs, and at this time, only one RD can be assigned to the VRF instances corresponding to the sub-interface; therefore, multiple VPNs share one RD. The RT is used to distribute routing information, and includes an import RT (Import RT) and an export RT (Export RT), which are respectively used for an import policy and an export policy of the routing information. The RT is also globally unique and can be used by only one VPN.

After the VPN service is established, VPN routing information is transmitted between PE devices through the Border Gateway Protocol (Border Gateway Protocol, BGP). Specifically, when a PE device learns, from a sub-interface, routing information that comes from a CE device, apart from importing the routing information to a corresponding VRF instance, the PE device further assigns a VPN label to the routing information, where the VPN label is used to identify the sub-interface for receiving the routing information. Then, through routing re-release, the routing information in the VRF instance is re-released to the BGP, and at this time, the original routing information is converted into VPN routing information by adding RD and RT parameters of the VRF instance.

After a PE device learns VPN routing information transmitted by a peer PE device through BGP, the PE device first determines, according to an RD, a VRF instance that the VPN routing information belongs to, and then removes the RD carried in the VPN routing information to restore the VPN routing information to the original routing information. Subsequently, it is determined, according to an import policy configured for the VRF instance that the VPN routing information belongs to, whether to import the routing information to a local VRF instance.

In this embodiment, after learning VPN routing information transmitted by a peer PE device through BGP, a PE device triggers establishment of a TE tunnel to the peer PE device. In an exemplary embodiment, the TE tunnel is automatically established based on a tunnel template. Specifically, multiple tunnel templates are configured on the PE device. For a VPN service, a tunnel template associated with the VPN service is selected from the multiple tunnel templates and is set by using a tunnel policy (Tunnel Policy). The tunnel policy includes a manner of selection by priority and a VPN binding manner. Each tunnel template, as a combination of a set of configuration commands, is used to control public attributes of the TE tunnel, including but not limited to bandwidth, priority, affinity, fast reroute (Fast ReRoute, FRR), tunnel backup (Backup), and automatic bandwidth adjustment. In other embodiments, the tunnel policy may be omitted, and at this time, the public attributes of the TE tunnel are controlled according to a default tunnel template. The establishment of the TE tunnel and specific configuration of various attributes are technologies well known in the art, and are not described herein again.

After the TE tunnel is established, the VPN service transmits VPN data through the TE tunnel. That is, the TE tunnel is used to bear the VPN service. Specifically, after an import PE device receives VPN packet data from the CE device through a sub-interface, the import PE device obtains a VPN label and an initial outer-layer label from a VRF instance, and attaches two layers of labels, namely, an outer label (also referred to as tunnel label) and an inner label (also referred to as VPN label), to the VPN packet data. Subsequently, the labeled VPN packet data is sent to a corresponding P device. The VPN packet data is forwarded hop by hop between P devices according to the outer-layer label; the outer-layer label is ejected on the last P device, and the VPN packet data containing only the VPN label is forwarded to an export PE device. The export PE device determines the corresponding sub-interface according to the VPN label, and sends the VPN packet data with the VPN label ejected to a correct CE device through the sub-interface.

After the VPN service is canceled, the TE tunnel is deleted in response to cancellation information about the VPN service. A specific process of deleting the TE tunnel is a technology well known in the art, and is not described herein again.

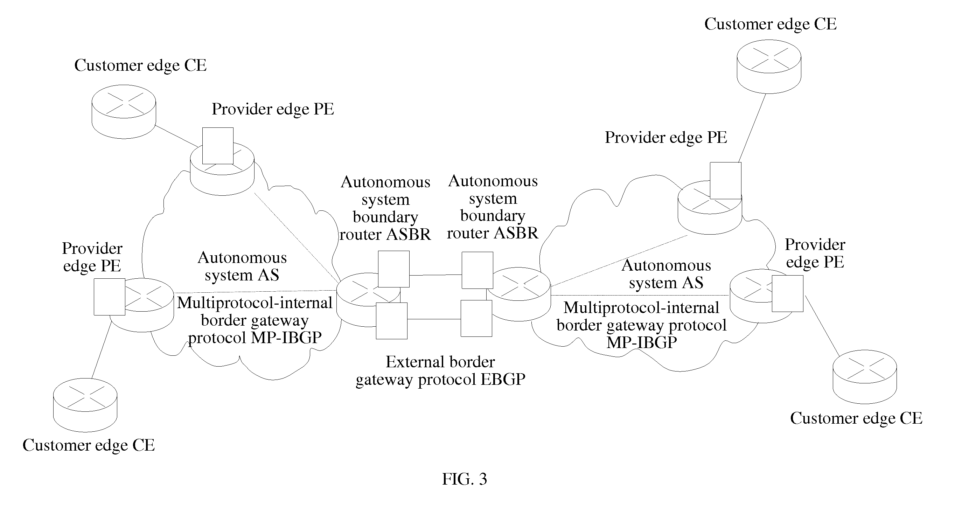

Referring to FIG. 3, FIG. 3 is a network schematic structural diagram of a second application scenario of a VPN implementation method based on a TE tunnel according to an embodiment of the present invention. As shown in FIG. 3, in this embodiment, the VPN implementation method based on a TE tunnel according to this embodiment of the present invention applies to a cross-domain MPLS L3VPN scenario.

In the scenario shown in FIG. 3, there are at least two ASs connected to each other. Autonomous system border routers (Autonomous System Border Router, ASBR) of different ASs act as a PE device and a CE device mutually, which is further referred to as back-to-back cross-domain. VPN routing information may be transmitted between a PE device and an ASBR in the same AS through the normal Multiprotocol-Internal Border Gateway Protocol (Multiprotocol-Internal Border Gateway Protocol, MP-IBGP), while between ASBRs, the VPN routing information may be transmitted through the External Border Gateway Protocol (External Border Gateway Protocol, EBGP).

In this scenario, for the purpose of establishing a TE tunnel between PE devices of different ASs, a VRF instance needs to be configured on each PE device and ASBR, and a corresponding tunnel template needs to be set on each PE device and ASBR for the VPN routing information, thereby establishing the TE tunnel segment by segment between a PE device and an ASBR in each AS by using the tunnel template. At the same time, the ASBRs are connected to each other through the Internet protocol (Internet Protocol, IP).

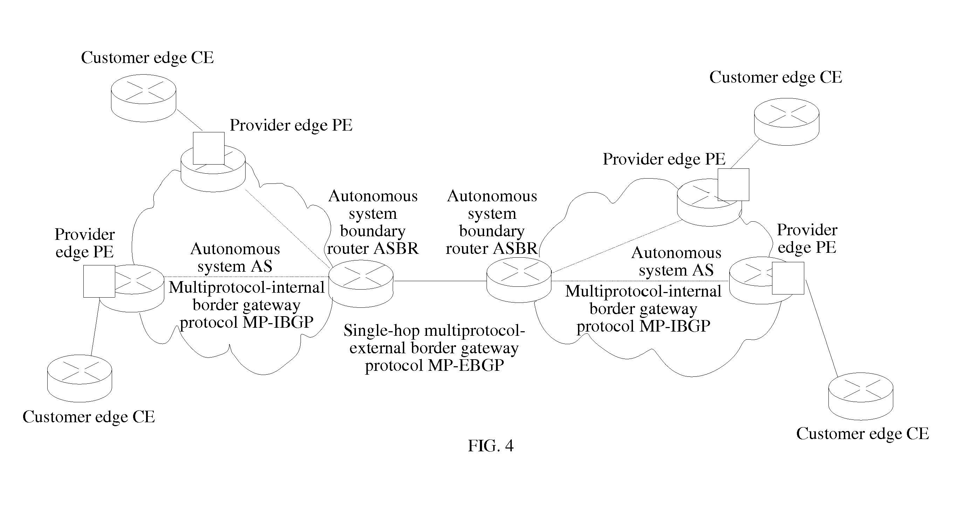

Referring to FIG. 4, FIG. 4 is a network schematic structural diagram of a third application scenario of a VPN implementation method based on a TE tunnel according to an embodiment of the present invention. As shown in FIG. 4, in this embodiment, the VPN implementation method based on a TE tunnel according to this embodiment of the present invention also applies to a cross-domain MPLS L3VPN scenario.

In the scenario shown in FIG. 4, VPN routing information may be transmitted between a PE device and an ASBR in the same AS through the normal MP-IBGP, while between ASs, the VPN routing information may be transmitted through the single-hop Multiprotocol-External Border Gateway Protocol (Multiprotocol-External Border Gateway Protocol MP-EBGP), which is further referred to as single-hop MP-EBGP cross-domain.

In this scenario, for the purpose of establishing a TE tunnel between PE devices of different ASs, a VRF instance needs to be configured on each PE device, and a processing manner for each PE device is the same as that in the second application scenario. A difference from the second application scenario is that the VRF instance does not need to be configured on an ASBR. At this time, a tunnel template needs to be set on the ASBR for a BGP peer (BGP Peer) by using a BGP routing policy, and then the TE tunnel is established segment by segment between a PE device and an ASBR in each AS by using the tunnel template.

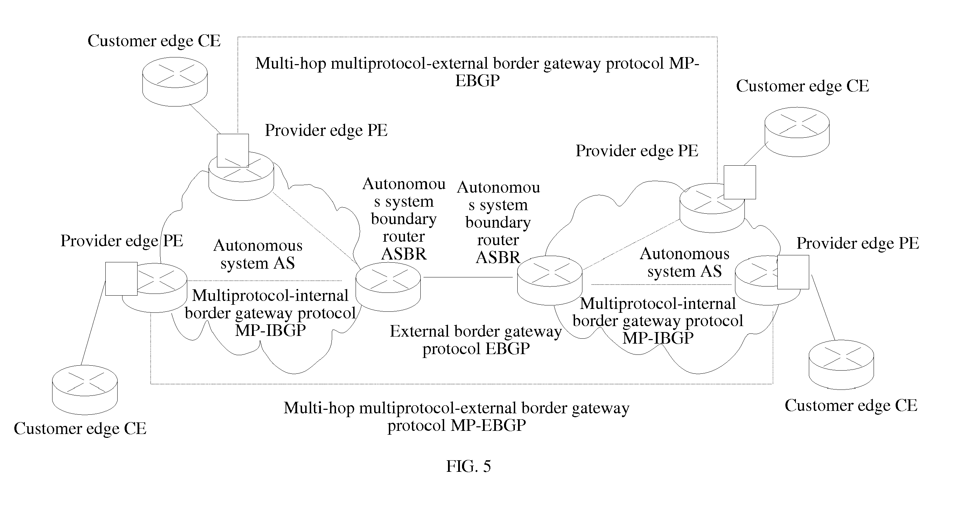

Referring to FIG. 5, FIG. 5 is a network schematic structural diagram of a fourth application scenario of a VPN implementation method based on a TE tunnel according to an embodiment of the present invention. As shown in FIG. 5, in this embodiment, the VPN implementation method based on a TE tunnel according to this embodiment of the present invention also applies to a cross-domain MPLS L3VPN scenario.

In the scenario shown in FIG. 5, VPG routing information is transmitted between PE devices of different ASs through the multi-hop MP-EBGP, which is further referred to as multi-hop MP-EBGP cross-domain.

In this scenario, BGP routing information with a public network label is transmitted between a PE device and an ASBR. Therefore, it is unnecessary to directly trigger automatic establishment of a TE tunnel by using the VPN routing information; instead, a tunnel template is set on each PE device and ASBR for a BGP peer by using a BGP routing policy, and the TE tunnel is established segment by segment between a PE device and an ASBR in each AS by using the tunnel template after the PE device learns the BGP routing information with the public network label.

Besides the MPLS L3VPN scenario described in the foregoing embodiment, the VPN implementation method based on a TE tunnel according to this embodiment of the present invention also applies to a multi-protocol label switching (Multi-Protocol Label Switching, MPLS) layer-2 virtual private network (L2VPN) application scenario. That is, a VPN service is an MPLS L2VPN service. Currently, the MPLS L2VPN has two typical technologies, namely, a virtual leased line (Virtual leased Line, VLL) and a virtual private LAN service (Virtual Private LAN Service, VPLS), where the VLL applies to point-to-point VPN networking, and the VPLS applies to point-to-multipoint or multipoint-to-point VPN networking. In addition, based on a manner for transmitting L2VPN information, the MPLS L2VPN is further classified into an SVC mode, a Martini mode, and a Kompella mode.

In the MPLS L2VPN, the CE device and the PE device are connected through an attachment circuit (Attachment Circuit, AC), the AC is an independent link or circuit, and an AC interface may be a physical interface or a logical interface. A logical connection is established between the PE devices through a virtual circuit (Virtual Circuit, VC). In SVC mode, layer-2 virtual private network virtual circuit information (L2VPN VC information) is set in a static configuration manner; in Martini mode, the L2VPN VC information is transmitted using the Label Distribution Protocol (Label Distribution Protocol, LDP); and in Kompella mode, the L2VPN VC information is transmitted using BGP.

The following describes applications of the VPN implementation method based on a TE tunnel according to the embodiment of the present invention in various MPLS L2VPN scenarios with reference to specific embodiments.

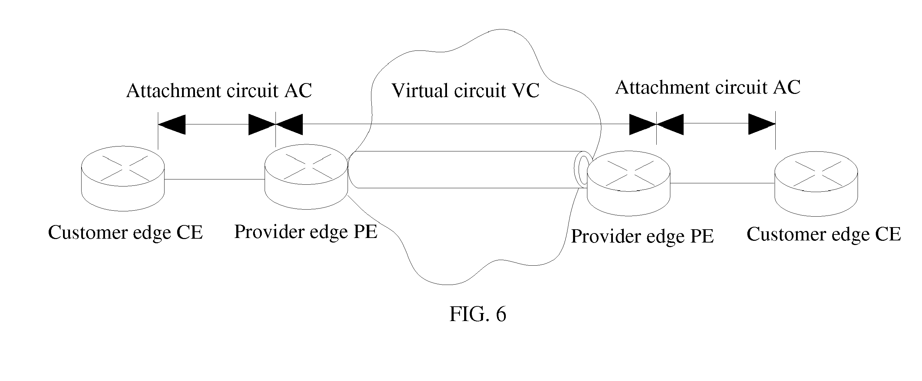

Referring to FIG. 6, FIG. 6 is a network schematic structural diagram of a fifth application scenario of a VPN implementation method based on a TE tunnel according to an embodiment of the present invention. As shown in FIG. 6, in this embodiment, the VPN implementation method based on a TE tunnel according to this embodiment of the present invention applies to an MPLS L2VPN scenario implemented in a VLL manner.

In the scenario shown in FIG. 6, automatic establishment of a TE tunnel is triggered through static or dynamic L2VPN VC information. Specifically, a tunnel template is set when the L2VPN VC information is configured on a PE device, and the automatic establishment of the TE tunnel based on the tunnel template is triggered according to the L2VPN VC information. In SVC mode, the automatic establishment of the TE tunnel based on the tunnel template is directly triggered during the configuration of the L2VPN VC information; in Martini mode, the automatic establishment of the TE tunnel based on the tunnel template is triggered when peer L2VPN VC information transmitted through LDP is learned; and in Kompella mode, the automatic establishment of the TE tunnel based on the tunnel template is triggered when peer L2VPN VC information transmitted through BGP is learned.

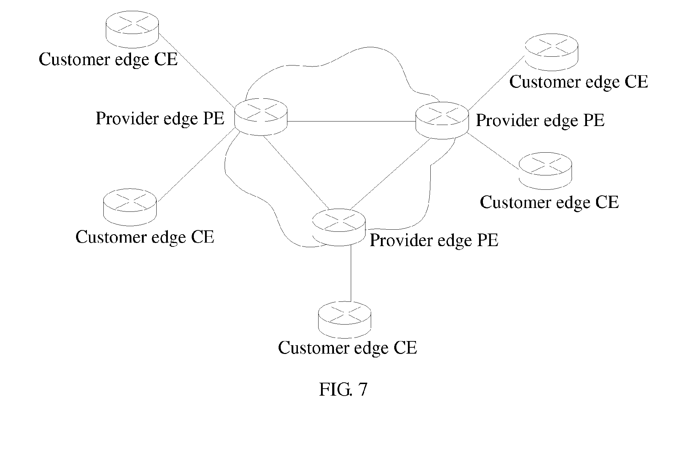

Referring to FIG. 7, FIG. 7 is a network schematic structural diagram of a sixth application scenario of a VPN implementation method based on a TE tunnel according to an embodiment of the present invention. As shown in FIG. 7, in this embodiment, the VPN implementation method based on a TE tunnel according to this embodiment of the present invention applies to an MPLS L2VPN scenario implemented by the VPLS technology.

In the scenario shown in FIG. 7, automatic establishment of a TE tunnel is triggered through dynamic L2VPN VC information. Specifically, in Martini mode, a tunnel template is set during configuration of a virtual switch interface (Virtual Switch Interface, VSI) peer and the automatic establishment of the TE tunnel based on the tunnel template is triggered when peer L2VPN VC information transmitted through LDP is learned; and in Kompella mode, the tunnel template is set during configuration of a VSI instance and the automatic establishment of the TE tunnel based on the tunnel template is triggered when peer L2VPN VC information transmitted through BGP is learned.

In addition, an MPLS L2VPN also has a pseudo-wire emulation edge to edge (Pseudo-Wire Emulation Edge to Edge, PWE3) technology. The PWE3 technology is classified into static pseudo-wire (Pseudo-Wire, PW) and dynamic PW based on a manner for transmitting the L2VPN VC information, and is classified into single-hop PW and multi-hop PW based on an implementation solution.

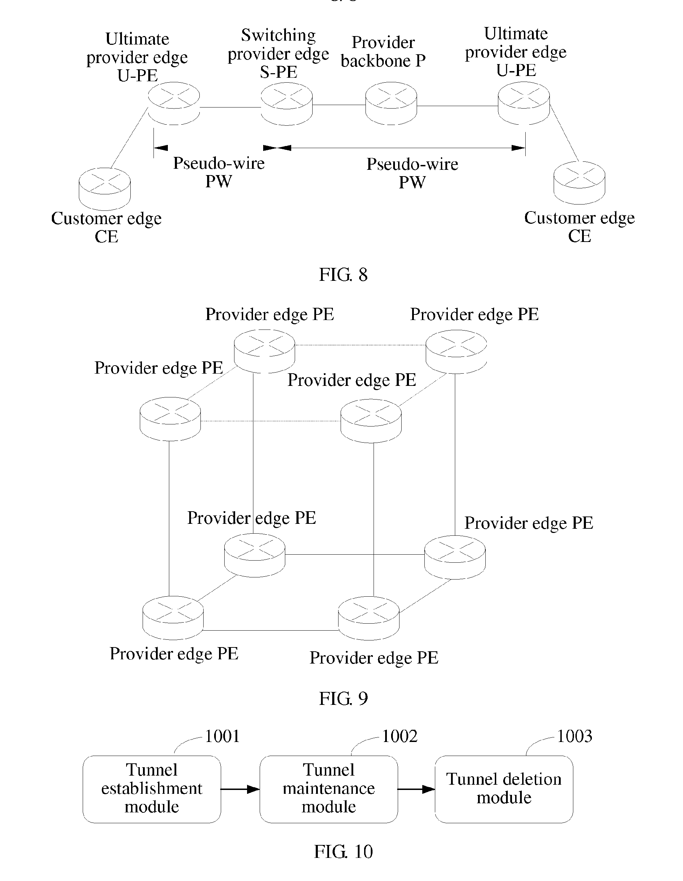

For the VPN implementation method based on a TE tunnel according to this embodiment of the present invention, the implementation manner thereof under the static PW is similar to the foregoing SVC implementation manner, where the automatic establishment of the TE tunnel based on the tunnel template is mainly triggered through the static L2VPN VC information. For the VPN implementation method based on a TE tunnel according to this embodiment of the present invention, the implementation manner thereof under the dynamic PW is similar to the VLL technology of the Martini mode, where the automatic establishment of the TE tunnel based on the tunnel template is mainly triggered through the dynamic L2VPN VC information transmitted through the LDP protocol. In the PWE3 technology, the multi-hop PW scenario shown in FIG. 8 is particularly worth mentioning.

In the scenario shown in FIG. 8, a PE device is divided into two layers, namely, an ultimate provider edge (Ultimate PE, U-PE) layer and a switching provider edge (Switching PE, S-PE) layer, which jointly implement functions of a PE device. Therefore, a tunnel template needs to be set when a switching pseudo-wire is configured on the S-PE, and automatic establishment of a TE tunnel based on the tunnel template is triggered after L2VPN VC information transmitted through LDP is learned.

In the foregoing manner, the VPN implementation method based on a TE tunnel according to this embodiment is capable of dynamically establishing or deleting a TE tunnel according to a requirement of a VPN service, providing a mechanism for establishing a TE tunnel as required, and deleting the tunnel not used by the VPN service in time in MPLS L3VPN and MPLS L2VPN scenarios, thereby effectively saving network resources.

Referring to FIG. 9, FIG. 9 is a network schematic structural diagram of an eighth application scenario of a VPN implementation method based on a TE tunnel according to an embodiment of the present invention. As shown in FIG. 9, in this embodiment, the VPN implementation method based on a TE tunnel according to this embodiment of the present invention is used to implement hierarchical services of a VPN service.

In the scenario shown in FIG. 9, the forwarding capability of a forwarding plane indicated by a dashed line is relatively strong, and the forwarding capability of a forwarding plane indicated by a solid line is relatively weak. Therefore, a first tunnel template and a second tunnel template that are different from each other may be configured. On a PE device, the first tunnel template is set for a VPN service with a relatively high service requirement to trigger establishment of a TE tunnel, so that the TE tunnel bearing the VPN service is confined on the forwarding plane indicated by the dashed line. At the same time, on the PE device, the second tunnel template is set for a VPN service with a relatively low service requirement to trigger establishment of a TE tunnel, so that the TE tunnel bearing the VPN service is confined on the forwarding plane indicated by the solid line.

In the foregoing manner, different tunnel templates are set for VPN services with different service requirements to establish TE tunnels that meet respective service requirements, so that differential services are provided based on a service type across the entire network, with different VPN services not affecting each other.

A person of ordinary skill in the art can understand that all or some steps in the method of the preceding embodiment may be performed by a program instructing relevant hardware. The program may be stored in a computer readable storage medium, and the storage medium may be a ROM/RAM, a disk, a compact disc, or the like. During execution, the program includes the following steps:
establishing a TE tunnel in response to establishment information about a VPN service;
bearing the VPN service using the TE tunnel; and
deleting the TE tunnel in response to cancellation information about the VPN service.

Referring to FIG. 10, FIG. 10 is a schematic block diagram of a VPN implementation system based on a TE tunnel according to an embodiment of the present invention. As shown in FIG. 10, the VPN implementation system based on a TE tunnel according to this embodiment includes a tunnel establishment module 1001, a tunnel maintenance module 1002, and a tunnel deletion module 1003.

The tunnel establishment module 1001 establishes a TE tunnel in response to establishment information about a VPN service; the tunnel maintenance module 1002 bears the VPN service using the TE tunnel; and the tunnel deletion module 1003 deletes the TE tunnel in response to cancellation information about the VPN service.

In the foregoing manner, the VPN implementation system based on a TE tunnel according to this embodiment of the present invention dynamically establishes or deletes a TE tunnel according to a requirement of a VPN service, provides a mechanism for establishing a TE tunnel as required, and deletes the tunnel not used by the VPN service in time, thereby effectively saving network resources.

The following describes functions of each module in detail with reference to the application scenarios shown in FIG. 2 to FIG. 9, where each module is generally configured on a PE device, for example, a PE router.

In the application scenario shown in FIG. 2, after learning VPN routing information transmitted by a peer PE device through BGP, the tunnel establishment module 1001 triggers establishment of a TE tunnel to the peer PE device. In an exemplary embodiment, the TE tunnel is automatically established based on a tunnel template. Specifically, multiple tunnel templates are configured on the PE device. For a VPN service, a tunnel template associated with the VPN service is selected from the multiple tunnel templates and is set by using a tunnel policy (Tunnel Policy). The tunnel policy includes a manner of selection by priority and a VPN binding manner. Each tunnel template, as a combination of a set of configuration commands, is used to control public attributes of the TE tunnel, including but not limited to bandwidth, priority, affinity, fast reroute (Fast ReRoute, FRR), tunnel backup (Backup), and automatic bandwidth adjustment. In other embodiments, the tunnel policy may be omitted, and at this time, the public attributes of the TE tunnel are controlled according to a default tunnel template. The establishment of the TE tunnel and configuration of various attributes are technologies well known in the art, and are not described herein again.

In the scenario shown in FIG. 3, to establish a TE tunnel between PE devices of different ASs, the tunnel establishment module 1001 needs to configure a VRF instance on each PE device and ASBR and set a corresponding tunnel template on each PE device and ASBR for VPN routing information, so that the tunnel establishment module 1001 establishes the TE tunnel segment by segment between a PE device and an ASBR in each AS by using the tunnel template.

In the scenario shown in FIG. 4, to establish a TE tunnel between PE devices of different ASs, the tunnel establishment module 1001 needs to configure a VRF instance on each PE device, and a processing manner for each PE device is the same as that in the second application scenario. A difference from the second application scenario is that the VRF instance does not need to be configured on an ASBR. At this time, a tunnel template needs to be set on the ASBR for a BGP peer (BGP Peer) by using a BGP routing policy, so that the tunnel establishment module 1001 establishes the TE tunnel segment by segment between a PE device and an ASBR in each AS by using the tunnel template.

In the scenario shown in FIG. 5, BGP routing information with a public network label is transmitted between a PE device and an ASBR. Therefore, the tunnel establishment module 1001 no longer needs to directly trigger automatic establishment of a TE tunnel by using VPN routing information, but sets a tunnel template on each PE device and ASBR for a BGP peer by using a BGP routing policy, and establishes the TE tunnel segment by segment between a PE device and an ASBR in each AS by using the tunnel template after learning the BGP routing information with the public network label.

In the scenario shown in FIG. 6, the tunnel establishment module 1001 triggers automatic establishment of a TE tunnel through static or dynamic L2VPN VC information. Specifically, the tunnel establishment module 1001 sets a tunnel template when configuring L2VPN VC information, and triggers the automatic establishment of the TE tunnel based on the tunnel template according to the L2VPN VC information. In SVC mode, the automatic establishment of the TE tunnel based on the tunnel template is directly triggered during the configuration of the L2VPN VC information; in Martini mode, the automatic establishment of the TE tunnel based on the tunnel template is triggered when peer L2VPN VC information transmitted through LDP is learned; and in Kompella mode, the automatic establishment of the TE tunnel based on the tunnel template is triggered when peer L2VPN VC information transmitted through BGP is learned.

In the scenario shown in FIG. 7, the tunnel establishment module 1001 triggers automatic establishment of a TE tunnel through dynamic L2VPN VC information. Specifically, in Martini mode, a tunnel template is set during configuration of a VSI peer and the automatic establishment of the TE tunnel based on the tunnel template is triggered when peer L2VPN VC information transmitted through LDP is learned, and in Kompella mode, a tunnel template is set during configuration of a VSI instance and the automatic establishment of the TE tunnel based on the tunnel template is triggered when peer L2VPN VC information transmitted through BGP is learned.

In the scenario shown in FIG. 8, the tunnel establishment module 1001 needs to set a tunnel template when a switching PW is configured on an S-PE, and triggers automatic establishment of a TE tunnel based on the tunnel template after leaning L2VPN VC information transmitted through LDP.

In the foregoing manner, the VPN implementation system based on a TE tunnel according to this embodiment of the present invention is capable of dynamically establishing or deleting a TE tunnel according to a requirement of a VPN service, providing a mechanism for establishing a TE tunnel as required, and deleting the tunnel not used by the VPN service in time in MPLS L3VPN and MPLS L2VPN scenarios, thereby effectively saving network resources.

In the scenario shown in FIG. 9, the forwarding capability of a forwarding plane indicated by a dashed line is relatively strong, and the forwarding capability of a forwarding plane indicated by a solid line is relatively weak. Therefore, the tunnel establishment module 1001 may configure a first tunnel template and a second tunnel template that are different from each other. Furthermore, the tunnel establishment module 1001 sets the first tunnel template for a VPN service with a relatively high service requirement to trigger establishment of a TE tunnel, so that the TE tunnel bearing the VPN service is confined on the forwarding plane indicated by the dashed line. At the same time, the tunnel establishment module 1001 sets the second tunnel template for a VPN service with a relatively low service requirement to trigger establishment of a TE tunnel, so that the TE tunnel bearing the VPN service is confined on the forwarding plane indicated by the solid line.

In the foregoing manner, different tunnel templates are set for VPN services with different service requirements to establish TE tunnels that meet respective service requirements, so that differential services are provided based on a service type across the entire network, with different VPN services not affecting each other.

The foregoing merely describes the embodiments of the present invention, which does not limit the patent scope of the present invention. Any equivalent structure or equivalent process change made based on the content of the specification and accompanying drawings of the present invention or any direct or indirect application in other related technical fields shall fall within the patent protection scope of the present invention.

## Claims

1. A virtual private network implementation method based on a traffic engineering tunnel, wherein the virtual private network implementation method comprises:
establishing a traffic engineering tunnel in response to establishment information about a virtual private network service;
bearing the virtual private network service using the traffic engineering tunnel; and
deleting the traffic engineering tunnel in response to cancellation information about the virtual private network service.

2. The virtual private network implementation method according to claim 1, wherein the step of establishing a traffic engineering tunnel in response to establishment information about a virtual private network service comprises:
setting, by using a tunnel policy, a tunnel template associated with the virtual private network service, so as to control public attributes of the traffic engineering tunnel by using the tunnel template.

3. The virtual private network implementation method according to claim 2, wherein the step of setting, by using a tunnel policy, a tunnel template associated with the virtual private network service comprises:
setting the tunnel template for the virtual private network service according to a service requirement of the virtual private network service, so as to confine the traffic engineering tunnel on a corresponding forwarding plane by using the tunnel template.

4. The virtual private network implementation method according to any one of claims 1 to 3, wherein the virtual private network service is a multi-protocol label switching layer-3 virtual private network service, and the step of establishing a traffic engineering tunnel in response to establishment information about a virtual private network service comprises:
triggering automatic establishment of the traffic engineering tunnel after virtual private network routing information transmitted through the Border Gateway Protocol is learned.

5. The virtual private network implementation method according to any one of claims 1 to 3, wherein the step of establishing a traffic engineering tunnel in response to establishment information about a virtual private network service comprises:
establishing the traffic engineering tunnel segment by segment between a provider edge device and an autonomous system border router in each autonomous system among at least two interconnected autonomous systems.

6. The virtual private network implementation method according to claim 5, wherein the step of establishing the traffic engineering tunnel segment by segment between a provider edge device and an autonomous system border router in each autonomous system among at least two interconnected autonomous systems comprises:
configuring virtual routing forwarding instances on the provider edge device and the autonomous system border router, setting a corresponding tunnel template on the provider edge device and the autonomous system border router for virtual private network routing information, and establishing the traffic engineering tunnel segment by segment between the provider edge device and the autonomous system border router in each autonomous system by using the tunnel template.

7. The virtual private network implementation method according to claim 5, wherein the step of establishing the traffic engineering tunnel segment by segment between a provider edge device and an autonomous system border router in each autonomous system among at least two interconnected autonomous systems comprises:
configuring a virtual routing forwarding instance on the provider edge device, setting a tunnel template on the autonomous system border router for a Border Gateway Protocol peer by using a Border Gateway Protocol routing policy, and establishing the traffic engineering tunnel segment by segment between the provider edge device and the autonomous system border router in each autonomous system by using the tunnel template.

8. The virtual private network implementation method according to claim 5, wherein the step of establishing the traffic engineering tunnel segment by segment between a provider edge device and an autonomous system border router in each autonomous system among at least two interconnected autonomous systems comprises:
setting a tunnel template on the provider edge device and the autonomous system border router for a Border Gateway Protocol peer by using a Border Gateway Protocol routing policy, and establishing the traffic engineering tunnel segment by segment between the provider edge device and the autonomous system border router in each autonomous system by using the tunnel template after Border Gateway Protocol routing information with a public network label is learned.

9. The virtual private network implementation method according to any one of claims 1 to 3, wherein the virtual private network service is a multi-protocol label switching layer-2 virtual private network service, and the step of establishing a traffic engineering tunnel in response to establishment information about a virtual private network service comprises:
triggering automatic establishment of the traffic engineering tunnel through static or dynamic layer-2 virtual private network virtual circuit information.

10. The virtual private network implementation method according to claim 9, wherein the step of triggering automatic establishment of the traffic engineering tunnel through static or dynamic layer-2 virtual private network virtual circuit information comprises:
setting the tunnel template during configuration of the layer-2 virtual private network virtual circuit information, triggering the automatic establishment of the traffic engineering tunnel based on the tunnel template during the configuration of the layer-2 virtual private network virtual circuit information or when the layer-2 virtual private network virtual circuit information transmitted through the Label Distribution Protocol or the Border Gateway Protocol is learned.

11. The virtual private network implementation method according to claim 9, wherein the step of triggering automatic establishment of the traffic engineering tunnel through static or dynamic layer-2 virtual private network virtual circuit information comprises:
setting the tunnel template during configuration of a virtual switching interface peer or a virtual switching interface instance, and triggering the automatic establishment of the traffic engineering tunnel based on the tunnel template when the layer-2 virtual private network virtual circuit information transmitted through the Label Distribution Protocol or the Border Gateway Protocol is learned.

12. The virtual private network implementation method according to claim 9, wherein the step of triggering automatic establishment of the traffic engineering tunnel through static or dynamic layer-2 virtual private network virtual circuit information comprises:
setting the tunnel template during configuration of a switching pseudo-wire, and triggering the automatic establishment of the traffic engineering tunnel based on the tunnel template when the layer-2 virtual private network virtual circuit information transmitted through the Label Distribution Protocol is learned.

13. A virtual private network implementation system based on a traffic engineering tunnel, wherein the virtual private network implementation system comprises:
a tunnel establishment module, configured to establish a traffic engineering tunnel in response to establishment information about a virtual private network service;
a tunnel maintenance module, configured to bear the virtual private network service using the traffic engineering tunnel; and
a tunnel deletion module, configured to delete the traffic engineering tunnel in response to cancellation information about the virtual private network service.

14. The virtual private network implementation system according to claim 13, wherein the tunnel establishment module sets, by using a tunnel policy, a tunnel template associated with the virtual private network service, so as to control public attributes of the traffic engineering tunnel by using the tunnel template.

15. The virtual private network implementation system according to claim 14, wherein the tunnel establishment module sets the tunnel template for the virtual private network service according to a service requirement of the virtual private network service, so as to confine the traffic engineering tunnel on a corresponding forwarding plane by using the tunnel template.

16. The virtual private network implementation system according to any one of claims 13 to 15, wherein the virtual private network service is a multi-protocol label switching layer-3 virtual private network service, and the tunnel establishment module triggers automatic establishment of the traffic engineering tunnel after learning virtual private network routing information transmitted through the Border Gateway Protocol.

17. The virtual private network implementation system according to any one of claims 13 to 15, wherein the tunnel establishment module establishes the traffic engineering tunnel segment by segment between a provider edge device and an autonomous system border router in each autonomous system among at least two interconnected autonomous systems.

18. The virtual private network implementation system according to claim 17, wherein the tunnel establishment module configures virtual routing forwarding instances on the provider edge device and the autonomous system border router, sets a corresponding tunnel template on the provider edge device and the autonomous system border router for virtual private network routing information, and establishes the traffic engineering tunnel segment by segment between the provider edge device and the autonomous system border router in each autonomous system by using the tunnel template.

19. The virtual private network implementation system according to claim 17, wherein the tunnel establishment module configures a virtual routing forwarding instance on the provider edge device, sets a tunnel template on the autonomous system border router for a Border Gateway Protocol peer by using a Border Gateway Protocol routing policy, and establishes the traffic engineering tunnel segment by segment between the provider edge device and the autonomous system border router in each autonomous system by using the tunnel template.

20. The virtual private network implementation system according to claim 17, wherein the tunnel establishment module sets a tunnel template on the provider edge device and the autonomous system border router for a Border Gateway Protocol peer by using a Border Gateway Protocol routing policy, and establishes the traffic engineering tunnel segment by segment between the provider edge device and the autonomous system border router in each autonomous system by using the tunnel template after learning Border Gateway Protocol routing information with a public network label.

21. The virtual private network implementation system according to any one of claims 13 to 15, wherein the virtual private network service is a multi-protocol label switching layer-2 virtual private network service, and the tunnel establishment module triggers automatic establishment of the traffic engineering tunnel through static or dynamic layer-2 virtual private network virtual circuit information.

22. The virtual private network implementation system according to claim 21, wherein the tunnel establishment module sets the tunnel template during configuration of the layer-2 virtual private network virtual circuit information, and triggers the automatic establishment of the traffic engineering tunnel based on the tunnel template during the configuration of the layer-2 virtual private network virtual circuit information or when the layer-2 virtual private network virtual circuit information transmitted through the Label Distribution Protocol or the Border Gateway Protocol is learned.

23. The virtual private network implementation system according to claim 21, wherein the tunnel establishment module sets the tunnel template during configuration of a virtual switching interface peer or a virtual switching interface instance, and triggers the automatic establishment of the traffic engineering tunnel based on the tunnel template when the layer-2 virtual private network virtual circuit information transmitted through the Label Distribution Protocol or the Border Gateway Protocol is learned.

24. The virtual private network implementation system according to claim 21, wherein the tunnel establishment module sets the tunnel template during configuration of a switching pseudo-wire, and triggers the automatic establishment of the traffic engineering tunnel based on the tunnel template when the layer-2 virtual private network virtual circuit information transmitted through the Label Distribution Protocol is learned.
